Europäisches Patentamt

European Patent Office

Office européen des brevets

(19)

(11) Veröffentlichungsnummer: **0 071 156**
**B1**

(12) **EUROPÄISCHE PATENTSCHRIFT**

(45) Veröffentlichungstag der Patentschrift:
28.10.87

(51) Int. Cl.⁴: **H 02 B 1/20**

(21) Anmeldenummer: **82106536.4**

(22) Anmeldetag: **20.07.82**

(54) **Verbindungsschienenblock.**

(30) Priorität: **23.07.81 DE 3129047**

(43) Veröffentlichungstag der Anmeldung:
**09.02.83 Patentblatt 83/6**

(45) Bekanntmachung des Hinweises auf die Patenterteilung:
**28.10.87 Patentblatt 87/44**

(84) Benannte Vertragsstaaten:
**AT BE CH FR IT LI NL SE**

(56) Entgegenhaltungen:
**DE - U - 7 222 786**
**DE - U - 7 806 981**
**DE - U - 7 909 435**
**FR - A - 2 349 984**
**US - A - 3 662 088**

(73) Patentinhaber: **BROWN, BOVERI & CIE**
**Aktiengesellschaft, Kallstadter Strasse 1,**
**D-6800 Mannheim 31 (DE)**

(72) Erfinder: **Gerhard, Karl, Ing.grad., Rindweg 6,**
**D-6905 Schriesheim (DE)**
Erfinder: **Bruckner, Werner, Karlstrasse 28,**
**D-6909 Walldorf (DE)**
Erfinder: **Bühler, Knut, Panoramastrasse 3,**
**D-6921 Neidenstein (DE)**

(74) Vertreter: **Kempe, Wolfgang, Dr. et al, c/o BROWN,**
**BOVERI & CIE AG ZPT Postfach 351,**
**D-6800 Mannheim 31 (DE)**

## Beschreibung

Die Erfindung bezieht sich auf einen Verbindungsschienenblock zur Verbindung gleichphasiger, aneinandergereihter elektrischer Installationsgeräte von Mehrphasenstromkreisen, in welchem die im wesentlichen als Flachstäbe ausgebildeten Verbindungsschienen parallel nebeneinander verlaufen und durch jeweils vollständige Ummantelung gegeneinander isoliert in einem kompakten Isolierstoffblock angeordnet sind und bei dem an die Verbindungsschienen Anschlusslaschen angeformt sind, welche aus dem Isolierstoffblock herausragen und miteinander fluchtend parallel zueinander in einer Ebene liegen. Eine derartige Anordnung ist aus der DE-U-7 222 786 bekannt.

Verbindungsschienen für den mehrphasigen Anschluss von Installationsgeräten sind in verschiedenen Ausführungen bekannt geworden.

Eine lagenweise Anordnung von Leiterschienen ist aus der US-A-3 662 088 bekannt geworden. Die dort offenbarte Lehre betrifft die Ausgestaltung von Verbindungsleitern für elektronische Schaltsysteme, welche bei niedriger Spannung hohe Strombelastbarkeit aufweisen. Hierzu ist vorgesehen, die Leiterschienen, die gegeneinander versetzte Abgänge zum Anschluss aufweisen, elektrostatisch zu beschichten und in Epoxydharz einzubetten.

Durch die DE-U-7 222 786 ist eine Vorrichtung aus Verbindungsschienen bekanntgeworden, bei der gemäss einer Ausführungsform die mittlere von drei Verbindungsschienen von einem U-förmigen Isolierprofil umfasst ist und gemeinsam mit den beiden äusseren Verbindungsschienen mit Kunststoff umspritzt bzw. umgossen ist. Auf diese Weise ist gewährleistet, dass die einzelnen Verbindungsschienen gegeneinander und nach aussen hin isoliert angeordnet sind. Lediglich die Anschlusslaschen ragen aus dem so gebildeten Isolierstoffblock heraus und sind ausserhalb des Isolierstoffblockes um etwa 90° abgewinkelt. Die nach aussen weisenden abgewinkelten Schenkel der Anschlusslaschen verschiedener Phasen sind unterschiedlich lang und enden in einer gemeinsamen Fluchtlinie, so dass sie an die Anschlussklemmen nebeneinander montierter Installationsgeräte angeschlossen werden können.

Aufgabe der Erfindung ist es, einen Verbindungsschienenblock der eingangs genannten Art zu verbessern, insbesondere durch Materialeinsparung und vereinfachten Aufbau die Herstellungskosten zu senken.

Diese Aufgabe wird erfindungsgemäss dadurch gelöst, dass die Verbindungsschienen ausschliesslich in thermoplastischen Kunststoff eingegossen oder durch thermoplastischen Kunststoff allseitig umspritzt sind und dass die Anschlusslaschen innerhalb des Isolierstoffblockes derart gekröpft sind, dass ihre aus dem Isolierstoffblock herausragenden Enden gemeinsam mit einer der Verbindungsschienen in derselben Ebene liegen. Zum Beispiel können bei einem Verbindungsschienenblock mit drei Verbindungsschienen die aus dem Isolierstoffblock herausragenden Anschlusslaschen in einer Ebene mit der mittleren Verbindungsschiene liegen.

Durch diese Ausgestaltung kann bei der Herstellung des Verbindungsschienenblockes auf ein U-förmiges Isolierprofil gemäss der DE-U-7 222 786 verzichtet werden. Die einzelnen Verbindungsschienen werden beim Eingeben in thermoplastischen Kunststoff bzw. beim allseitigen Umspritzen durch thermoplastischen Kunststoff an den herausstehenden Anschlusslaschen eingespannt, so dass sie während des Eingiessens bzw. Umspritzens fixiert und auf gegenseitigen Abstand gehalten werden.

Die erfindungsgemässe Ausgestaltung der Anschlusslaschen, bei der auf eine Abwinklung der Anschlusslaschen gegen die Verbindungsschienen verzichtet wird, führt einerseits zu kurzen Anschlusslaschen und damit zur Einsparung von Anschlusslaschenmaterial, das in der Regel teurer ist (Kupferpreis). Andererseits ermöglicht dieser Ausgestaltung die Verwendung gleicher Verbindungsschienen mit angeformten Anschlusslaschen für verschiedene Phasen eines Verbindungsschienenblockes.

Beispielsweise können bei einem Verbindungsschienenblock für drei Phasen die beiden äusseren Verbindungsschienen, die gekröpfte Anschlusslaschen aufweisen, als gleiche Teile ausgebildet sein. Sie werden bei der Montage, vor dem Eingiessen bzw. Einspritzen lediglich zueinander spiegelbildlich eingespannt, so dass die Abkröpfungen einander zugewandt sind und die Enden der Anschlusslaschen miteinander fluchten. Die mittlere Verbindungsschiene trägt in diesem Fall ungekröpfte Anschlusslaschen.

Schliesslich ist der Raumbedarf eines erfindungsgemässen Verbindungsschienenblockes gering.

Von besonderem Vorteil ist die beanspruchte Ausgestaltung für einen Verbindungsschienenblock, bei dem der Isolierstoffblock im Bereich zwischen zwei benachbarten Verbindungsschienen wenigstens eine Ausnehmung aufweist, deren Ausdehnung im Querschnitt des Verbindungsschienenblockes so bemessen ist, dass wenigstens jede gerade Verbindungslinie, die zwischen den benachbarten Verbindungsschienen gezogen werden kann, die Ausnehmung schneidet.

Solche Ausnehmungen können eine erhebliche Einsparung an Isolierstoffmaterial zur Folge haben. Sie können auch der Gefahr begegnen, dass beim Ablängen des Verbindungsschienenblockes Material der Verbindungsschienen über die Isolation hinweg verschmiert wird und Kurzschlussbrücken bildet bzw. die Spannungsfestigkeit des Verbindungsschienenblockes an der Schnittstelle herabsetzt.

Zur Vermeidung solcher Kurzschlussbrücken ist es u.a. durch die DE-U-7 806 981 bekannt, den Verbindungsschienenblock als Mehrkammerisolierprofil auszubilden, in das die einzelnen Verbindungsschienen eingesetzt sind. Die die einzelnen Kammern voneinander trennenden Wände des Mehrkammerisolierprofils sind dabei doppelwandig ausgebildet und schliessen einen Luftspalt ein. Ein Mehrkammerisolierprofil hat jedoch den Nachteil, dass die Verbindungsschienen nicht allseits durch Isoliermaterial umhüllt sind, sondern lediglich in Kammern des Isolierprofils eingelegt sind. Da sich in den Kammern bevorzugt Schmutz und Staub verfängt, sowie sich Feuchtigkeit bilden kann, besteht die Gefahr, dass sich zwischen Schienen verschiedenen Potentials entlang der Kammerwände Kriechströme ausbilden, wodurch die Spannungsfestigkeit des Verbindungsschienenblockes herabgesetzt wird oder sogar Kurzschlüsse zwischen Schienen verschiedenen Potentials entstehen können. Zur Vermeidung solcher Kriechströme müssen die Kammerränder relativ hoch über die Verbindungsschienen hinausgezogen werden, was zu relativ grossen Abmessungen des Verbindungsschienenblockes führt. Der Feuchtigkeitseinfluss kann bei solchen Konstruktionen nicht ausgeschlossen werden.

Um eine hohe Materialeinsparung zu erreichen ist es vorteilhaft, möglichst grosse Ausnehmungen im Isolierstoffblock vorzunehmen. Es muss jedoch dafür Sorge getragen werden, dass die Sammelschienen allseits durch Isolierstoff ausreichender Dicke abgedeckt sind und dass die Stabilität des Verbindungsschienenblockes erhalten bleibt.

Vorzugsweise sind die Ausnehmungen auf der Seite des Verbindungsschienenblockes, die der Austrittsseite der Anschlusslaschen abgewandt ist, nach aussen offen. Diese Öffnungen können durch eine Folie überklebt oder durch einen Pfropfen verschlossen werden. Hierdurch wird insbesondere das Eindringen und Festsetzen von Schmutz und/oder Feuchtigkeit vermieden.

Vorzugsweise befinden sich die Ausnehmungen in den Längenabschnitten des Verbindungsschienenblockes, die zwischen jeweils zwei benachbarten Anschlusslaschen liegen. In solche Bereiche werden beim Ablängen in der Regel die Schnittstellen gelegt, so dass die hier befindlichen Ausnehmungen die Ausbildung von Kurzschlussbrücken durch Verschmieren beim Ablängen verhindern.

Die Ausdehnung einer Ausnehmung in Längsrichtung des Verbindungsschienenblockes kann vorteilhaft annähernd gleich dem Abstand zwischen zwei benachbarten Anschlusslaschen des Verbindungsschienenblockes sein. Sie kann jedoch auch annähernd gleich dem Abstand zwischen zwei benachbarten Anschlusslaschen die einer Verbindungsschiene zugeordnet sind, sein. Schliesslich kann es unter Berücksichtigung von Materialersparnis und Stabilität des Verbindungsschienenblockes vorteilhaft sein, dass sich die Ausnehmung über die gesamte Isolierstoffblocklänge erstreckt.

Letztere Ausgestaltung kann zur Vereinfachung der Herstellung als nach aussen offener Längsschlitz ausgebildet sein. Dieser Längsschlitz lässt sich gegebenenfalls durch eine Klebefolie oder einen Pfropfen nachträglich wieder verschliessen.

Zur Vermeidung solcher Längsschlitze, die die Stabilität des Verbindungsschienenblockes beein

trächtigen können, kann es vorteilhaft sein, dass die Ausnehmung, die sich über die gesamte Isolierstoffblocklänge erstreckt, lediglich an den Längsenden des Verbindungsschienenblockes nach aussen offen ist.

Eine Leiterschienenanordnung zur Verbindung gedruckter Leiterplatten mit einer Ausbildung der Anschlusslaschen der Schienen derart, dass sie miteinander fluchtend in einer Ebene liegen, die sich parallel zu den Ebenen, in denen die Leiterschienen liegen, erstreckt, ist in der FR-A-2 349 984 gezeigt. Hier treten normalerweise nur kleine Ströme auf. Derartige Leiterschienenanordnungen sind also für Installationsgeräte, die für erheblich grössere Ströme vorgesehen sind, ungeeignet.

Anhand der Zeichnung, in der mehrere Ausführungsbeispiele der Erfindung gezeigt sind, sollen die Erfindung sowie vorteilhafte Ausgestaltungen und Weiterbildungen näher erläutert werden.

Es zeigt:

Figur 1 einen erfindungsgemässen Verbindungsschienenblock in Draufsicht,

Figur 2 den Verbindungsschienenblock gem. Figur 1 in Seitenansicht,

Figur 3 den Verbindungsschienenblock gem. Figur 1 im Schnitt A–A,

Figur 4 einen erfindungsgemässen Verbindungsschienenblock mit Ausnehmungen in Draufsicht,

Figur 5 den Verbindungsschienenblock gem. Figur 4 in Seitenansicht,

Figur 6 und Figur 7 je einen Verbindungsschienblock gemäss Figur 4 im Schnitt B–B und C–C,

Figur 8 einen weiteren erfindungsgemässen Verbindungsschienenblock mit Ausnehmungen in Draufsicht und

Figur 9 den Verbindungsschienenblock gem. Figur 8 im Schnitt D–D.

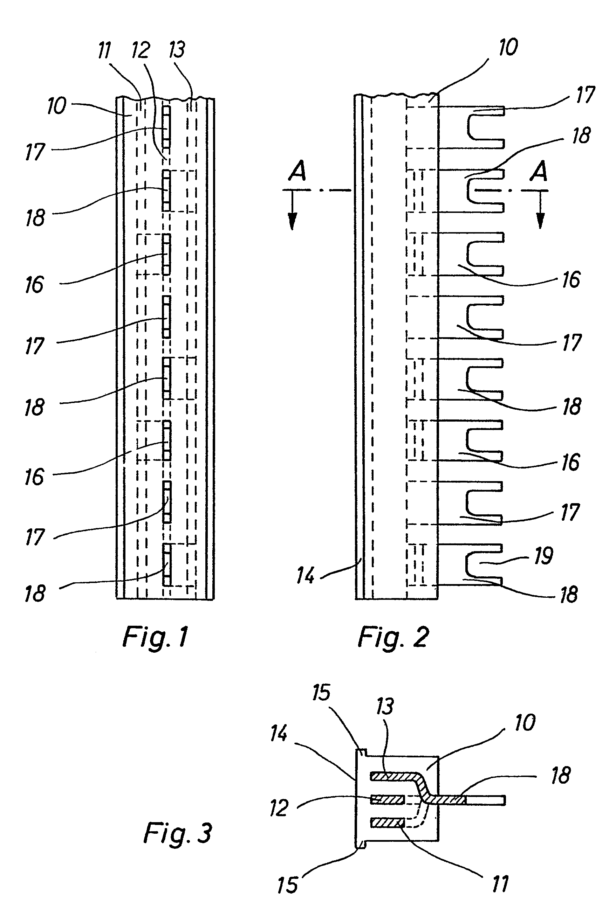

Die Figuren 1, 2 und 3 stellen einen Verbindungsschienenblock in drei Ansichten dar, der aus einem Isolierstoffblock 10 gebildet ist, in den drei Verbindungsschienen 11, 12, 13 eingebettet sind. Das Profil des Isolierstoffblockes 10 ist im wesentlichen rechteckig. Eine Seitenfläche des Isolierstoffblockes 10, die hier als Basisfläche 14 bezeichnet wird, ist durch seitlich angeformte Stege 15 verbreitert ausgeführt. Jede der drei Verbindungsschienen 11, 12, 13 trägt in regelmässigen Abständen Anschlusslaschen 16, 17, 18, die aus dem Isolierstoffblock 10 an der der Basisfläche 14 gegenüberliegenden Seite herausragen.

Die Anschlusslaschen 16, 18 der beiden äusseren Verbindungsschienen 11, 13 sind innerhalb des Isolierstoffblockes 10 gekröpft, so dass alle Anschlusslaschen 16, 17, 18 in der Ebene liegen, die durch die mittlere Verbindungsschiene 12 aufgespannt wird. Die Anschlusslaschen 16, 17, 18 ragen alle gleich weit aus dem Isolierstoffblock 10 heraus. Ihre freien Enden weisen je einen Schlitz 19 auf, in die die Anschlussklemmen der nicht dargestellten Installationsgeräte eingeführt werden.

Es ist ersichtlich, dass jede der Verbindungsschienen 11, 12, 13 allseits durch Isolierstoff um

geben ist, so dass die Verbindungsschienen 11, 12, 13 gegeneinander und nach aussen isoliert sind. Lediglich an den beiden Enden des Isolierstoffblockes 10 ragen die Stirnflächen der Verbindungsschienen 11, 12, 13 an die Oberfläche des Isolierstoffblockes 10.

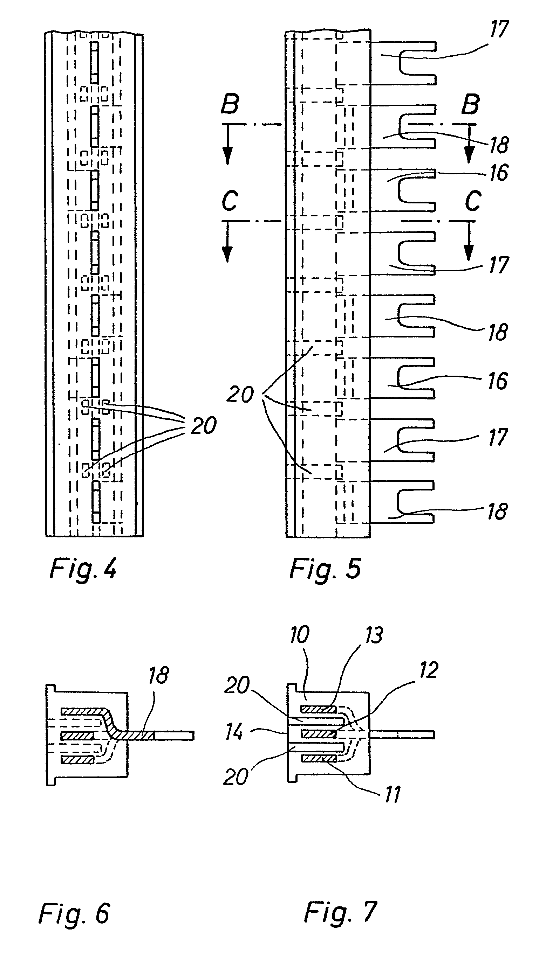

Die Figuren 4, 5, 6 und 7 stellen in verschiedenen Ansichten und Schnitten einen Verbindungsschienenblock dar, der in gleicher Weise aufgebaut ist, wie der Verbindungsschienenblock gem. den Figuren 1, 2 und 3. Er weist jedoch im Unterschied zu dem bereits beschriebenen Verbindungsschienenblock Ausnehmungen 20 auf, die zu der Basisfläche 14 hin offen sind. Die Ausnehmungen 20 liegen, wie es insbesondere aus der Figur 7 ersichtlich ist, jeweils zwischen der mittleren Verbindungsschiene 12 und einer der beiden äusseren Verbindungsschienen 11, 13. Sie sind von der Basisfläche 14 so tief in den Isolierstoffblock 10 eingelassen, dass sie über die Breite der Verbindungsschienen 11, 12, 13 hinausragen.

In Längsrichtung des Verbindungsschienenblockes sind die Ausnehmungen 20 jeweils in den Bereichen angeordnet, die zwischen den Anschlusslaschen 16, 17, 18 liegen. Die Ausnehmungen 20 sind so bemessen und angeordnet, dass sie an keiner Stelle die Verbindungsschienen 11, 12, 13 oder die Anschlusslaschen 16, 17, 18 freilegen.

Beim Ablängen eines Verbindungsschienenblockes wird der Schnitt zwischen zwei Anschlusslaschen 16, 17, 18 (z.B. längs der Schnittlinie C–C) gelegt. Durch die Lage der Ausnehmungen 20 ist es gewährleistet, dass durch Verschmieren von Verbindungsschienenmaterial in der Schnittebene sich keine Kurzschlussbrücken zwischen zwei Verbindungsschienen 11, 12, 13 ausbilden können, da sich zwischen zwei benachbarten Verbindungsschienen 11, 12, 13 ein Luftspalt befindet.

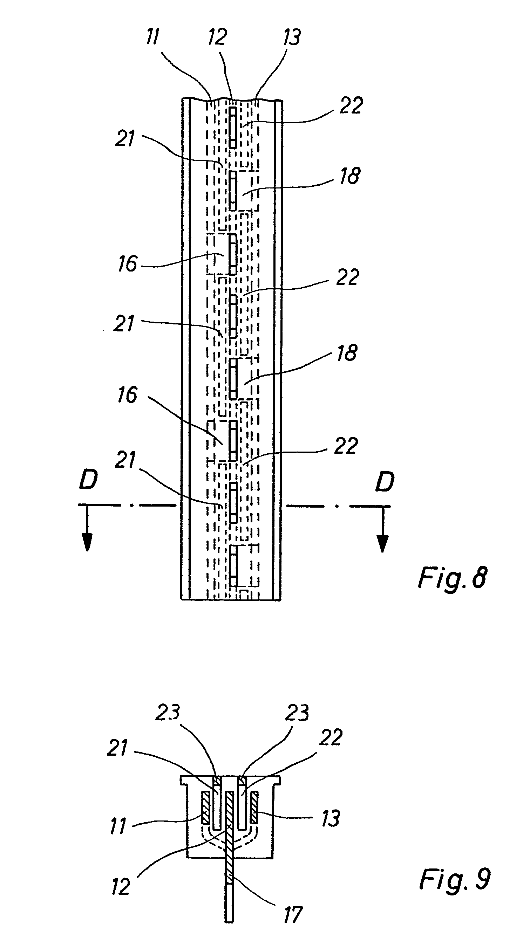

Die Figuren 8 und 9 zeigen einen Verbindungsschienenblock in Draufsicht bzw. im Schnitt, der sich in der Ausgestaltung seiner Ausnehmungen 21, 22 von den bereits beschriebenen Verbindungsschienenblöcken unterscheidet. Wie ein Vergleich zwischen den Figuren 7 und 9 zeigt, unterscheiden sich die Ausnehmungen 20 bzw. 21, 22 hinsichtlich Tiefe und Breite nicht. Aus der Figur 8 ist jedoch zu entnehmen, dass die Ausdehnung der Ausnehmung 20 bzw. 21 in Längsrichtung des hier gezeigten Verbindungsschienenblockes annähernd gleich dem Abstand zwischen zwei benachbarten Anschlusslaschen 16 bzw. 18 jeweils einer Verbindungsschiene 11 bis 13 ist. Aus Figur 9 ist ausserdem ersichtlich, dass die Ausnehmungen 21, 22 durch Pfropfen 23 verschlossen sind.

**Patentansprüche**

1. Verbindungsschienenblock zur Verbindung gleichphasiger, aneinandergereihter elektrischer Installationsgeräte von Mehrphasenstromkreisen, in welchem die im wesentlichen als Flachstäbe ausgebildeten Verbindungsschienen (11, 12, 13) parallel nebeneinander verlaufen und durch jeweils vollständige Ummantelung gegeneinander isoliert in einem kompakten Isolierstoffblock (10) angeordnet sind und bei dem an die Verbindungsschienen (11, 12, 13) Anschlusslaschen (16, 17, 18) angeformt sind, welche aus dem Isolierstoffblock (10) herausragen und miteinander fluchtend parallel zueinander in einer Ebene liegen, dadurch gekennzeichnet, dass die Verbindungsschienen (11, 12, 13) ausschliesslich in thermoplastischen Kunststoff eingegossen oder durch thermoplastischen Kunststoff allseitig umspritzt sind und dass die Anschlusslaschen (16, 17, 18) innerhalb des Isolierstoffblocks (10) derart gekröpft sind, dass ihre aus dem Isolierstoffblock herausragenden Enden gemeinsam mit einer der Verbindungsschienen (11, 12, 13) in derselben Ebene liegen.

2. Verbindungsschienenblock nach Anspruch 1, dadurch gekennzeichnet, dass der Isolierstoffblock (10) im Bereich zwischen zwei benachbarten Verbindungsschienen (11, 12, 13) wenigstens eine Ausnehmung (20, 21, 22) aufweist, deren Ausdehnung im Querschnitt des Isolierstoffblockes (10) so bemessen ist, dass wenigstens jede gerade Verbindungslinie, die zwischen den benachbarten Verbindungsschienen (11, 12, 13) gezogen werden kann, die Ausnehmung schneidet.

3. Verbindungsschienenblock nach Anspruch 2, dadurch gekennzeichnet, dass die Ausnehmung (20, 21, 22) auf der Seite des Verbindungsschienenblockes, die der Austrittsseite der Anschlusslaschen (16, 17, 18) abgewandt ist, nach aussen offen ist.

4. Verbindungsschienenblock nach einem der Ansprüche 2 oder 3, dadurch gekennzeichnet, dass sich die Ausnehmung (20, 21, 22) in dem Bereich eines Längenabschnittes des Verbindungsschienenblockes befindet, der zwischen zwei benachbarten Anschlusslaschen (16, 17, 18) liegt.

5. Verbindungsschienenblock nach einem der Ansprüche 2 oder 3, dadurch gekennzeichnet, dass die Ausdehnung der Ausnehmung (20, 21, 22) in Längsrichtung des Verbindungsschienenblockes annähernd gleich dem Abstand zwischen zwei benachbarten Anschlusslaschen (16, 17, 18) ist.

6. Verbindungsschienenblock nach einem der Ansprüche 2 oder 3, dadurch gekennzeichnet, dass die Ausdehnung der Ausnehmung (20, 21, 22) in Längsrichtung des Verbindungsschienenblockes annähernd gleich dem Abstand zwischen zwei benachbarten Anschlusslaschen (16 bzw. 18) der gleichen Verbindungsschiene (21 bzw. 22) ist.

7. Verbindungsschienenblock nach einem der Ansprüche 2 oder 3, dadurch gekennzeichnet, dass sich die Ausnehmung über die gesamte Isolierstoffblocklänge (10) erstreckt.

8. Verbindungsschienenblock nach Anspruch 7, dadurch gekennzeichnet, dass die Ausnehmung lediglich an den Längsenden des Verbindungsschienenblockes nach aussen offen ist.

9. Verbindungsschienenblock nach einem der Ansprüche 3 bis 7, dadurch gekennzeichnet, dass die Ausnehmung (21, 22) als Längsschlitz ausgebildet ist, der zu der Seite des Verbindungsschienenblockes offen ist, die der Austrittsseite der Anschlussklemmen abgewandt ist.

10. Verbindungsschienenblock nach einem der Ansprüche 3 bis 9, dadurch gekennzeichnet, dass die Öffnung der Ausnehmung (20, 21, 22) durch eine Folie oder durch einen Pfropfen (23) verschliessbar ist.

## Claims

1. Connecting-strip block for connecting electrical in-phase in-series installation equipment of multi-phase circuits, in which the connecting strips (11, 12, 13) designed essentially as flat bars extend parallel and next to one another and, insulated from one another in each case by means of a complete sheathing, are arranged in a compact insulating block (10), and in which terminal lugs (16, 17, 18) are formed on the connecting strips (11, 12, 13), project from the insulating block (10) and lie in one plane aligned with and parallel to one another, characterized in that the connecting strips (11, 12, 13) are cast solely in thermoplastic or extrusion-coated on all sides with thermoplastic, and in that the terminal lugs (16, 17, 18) are bent within the insulating block (10) in such a way that their ends projecting from the insulating block lie jointly in the same plane as one of the connecting strips (11, 12, 13).

2. Connecting-strip block according to Claim 1, characterized in that the insulating block (10) has, in the region between two adjacent connecting strips (11, 12, 13) at least one recess (20, 21, 22), of which the extent in the cross-section of the insulating block (10) is such that at least any straight connecting line which can be drawn between the adjacent connecting strips (11, 12, 13) intersects the recess.

3. Connecting-strip block according to Claim 2, characterized in that the recess (20, 21, 22) is open outwards on the side of the connecting-strip block facing away from the exit side of the teminal lugs (16, 17, 18).

4. Connecting-strip block according to one of Claims 2 or 3, characterized in that the recess (20, 21, 22) is located in the region of a length portion of the connecting-strip block which is between two adjacent terminal lugs (16, 17, 18).

5. Connecting-strip block according to one of Claims 2 or 3, characterized in that the extent of the recess (20, 21, 22) in the longitudinal direction of the connecting-strip block is approximately equal to the distance between two adjacent terminal lugs (16, 17, 18).

6. Connecting-strip block according to one of Claims 2 or 3, characterized in that the extent of the recess (20, 21, 22) in the longitudinal direction of the connecting-strip block is approximately equals to the distance between two adjacent terminal lugs (16 and 18) of the same connecting strip (21 and 22).

7. Connecting-strip block according to one of Claims 2 or 3, characterized in that the recess extends over the entire length of the insulating block (10).

8. Connecting-strip block according to Claim 7, characterized in that the recess is open outwards only at the longitudinal ends of the connecting-strip block.

9. Connecting-strip block according to one of Claims 3 to 7, characterized in that the recess (21, 22) is designed as a longitudinal slot open on the side of the connecting-strip block which faces away from the exit side of the terminal lugs.

10. Connecting-strip block according to one of Claims 3 to 9, characterized in that the orifice of the recess (20, 21, 22) can be closed by means of a film or by means of a plug (23).

## Revendications

1. Bloc de barres de jonction pour le raccordement d'appareils d'installation électriques, en phase et alignés à la suite les uns des autres, de circuits de courant polyphasé, dans lequel les barres de jonction (11, 12, 13), réalisées sensiblement en forme de barreaux plats, sont disposées parallèlement les unes à côté des autres et sont installées dans un bloc compact (10) en matériau isolant tout en étant respectivement isolées entre elles par un enrobage les entourant complètement et dans lequel, sur les barres de jonction (11, 12, 13) sont façonnées d'une seule pièce des barrettes de connexion (16, 17, 18) qui font saillie en dehors du bloc (10) en matériau isolant et qui sont situées parallèlement entre elles et dans l'alignement les unes des autres dans un même plan, caractérisé par le fait que les barres de jonction (11, 12, 13) exclusivement sont scellées dans une matière thermoplastique ou entourées de tous côtés par une matière thermoplastique moulée par injection et que les barrettes de connexion (16, 17, 18), à l'intérieur du bloc (10) en matériau isolant, sont coudées de telle sorte que leurs extrémités faisant saillie en dehors du bloc en matériau isolant soient situées dans le même plan que l'une des barres de jonction (11, 12, 13).

2. Bloc de barres de jonction selon la revendication 1, caractérisé par le fait que le bloc (10) en matériau isolant, dans la zone comprise entre deux barres de jonction voisines (11, 12, 13), comporte au moins un évidement (20, 21, 22) dont l'étendue dans la section transversale du bloc (10) en matériau isolant est dimensionnée de manière qu'au moins chaque ligne de liaison rectiligne, pouvant être tirée entre les barres de jonction voisines (11, 12, 13), coupe l'évidement.

3. Bloc de barres de jonction selon la revendication 2, caractérisé par le fait que l'évidement (20, 21, 22) est ouvert vers l'extérieur du côté du bloc de barres de jonction qui est situé du côté opposé à la sortie des barrettes de connexion (16, 17, 18).

4. Bloc de barres de jonction selon l'une des revendications 2 ou 3, caractérisé par le fait que l'évidement (20, 21, 22) se trouve dans la zone d'une section longitudinale du bloc de barres de jonction qui est située entre deux barrettes de connexion voisines (16, 17, 18).

5. Bloc de barres de jonction selon l'une des revendications 2 ou 3, caractérisé par le fait que l'étendue de l'évidement (20, 21, 22) dans le sens longitudinal du bloc de barres de jonction est approximativement égale à la distance comprise entre deux barrettes de connexion voisines (16, 17, 18).

6. Bloc de barres de jonction selon l'une des revendications 2 ou 3, caractérisé par le fait que l'étendue de l'évidement (20, 21, 22) dans le sens longitudinal du bloc de barres de jonction est approximativement égale à la distance comprise entre deux barrettes de connexion voisines (16, 18) de la même barre de jonction (21, 22).

7. Bloc de barres de jonction selon l'une des revendications 2 ou 3, caractérisé par le fait que l'évidement s'étend sur toute la longueur du bloc (10) en matériau isolant.

8. Bloc de barres de jonction selon la revendication 7, caractérisé par le fait que l'évidement est uniquement ouvert vers l'extérieur au niveau des extrémités longitudinales du bloc de barres de jonction.

9. Bloc de barres de jonction selon l'une des revendications 3 à 7, caractérisé par le fait que l'évidement (21, 22) est réalisé sous la forme d'une fente longitudinale qui est ouverte du côté du bloc de barres de jonction qui est situé du côté opposé à la sortie des barrettes de raccordement.

10. Bloc de barres de jonction selon l'une des revendications 3 à 9, caractérisé par le fait que l'ouverture de l'évidement (20, 21, 22) peut être fermée par une feuille ou par un tampon (23).

Fig. 1

Fig. 2

Fig. 3

Fig. 4

Fig. 5

Fig. 6

Fig. 7

Fig.8

Fig.9